# EUROPÄISCHE PATENTSCHRIFT

(11) **EP 2 059 547 B1**
(45) Veröffentlichungstag und Bekanntmachung des Hinweises auf die Patenterteilung: **02.12.2009**
(21) Anmeldenummer: 07801807.4
(22) Anmeldetag: 22.08.2007
(51) Int. Cl.: C08G 18/32, C08G 18/48, C08G 18/66

(54) **MASSIVE, NICHT-GESCHÄUMTE, GEFÜLLTE, ELASTOMERE FORMTEILE UND EIN VERFAHREN ZU DEREN HERSTELLUNG**
SOLID, UNEXPANDED, FILLED, MOLDED ELASTOMER PARTS AND METHOD FOR PRODUCING THE SAME
PIÈCES MOULÉES ÉLASTOMÉRIQUES, ADDITIONNÉES D'UNE CHARGE, NON EXPANSÉES ET MASSIVES ET PROCÉDÉ POUR LEUR PRODUCTION

(30) Priorität: 30.08.2006 DE 102006040504
(43) Veröffentlichungstag der Anmeldung: 20.05.2009
(73) Patentinhaber: Bayer MaterialScience AG, 51368 Leverkusen (DE)
(72) Erfinder: EMMRICH, Eva, 45149 Essen (DE); BRECHT, Klaus, 51399 Burscheid (DE); PFEUFFER, Uwe, 51377 Leverkusen (DE)
(86) Internationale Anmeldenummer: PCT/EP2007/007375
(87) Internationale Veröffentlichungsnummer: WO 2008/025469

(56) Entgegenhaltungen:
- WO-A-2006/076278
- DE-A1- 10 024 097
- US-A- 5 079 328

## Beschreibung

Die Erfindung betrifft massive, nicht-geschäumte, gefüllte, elastomere Polyurethan-Formteile, ein Verfahren zu deren Herstellung und ihre Verwendung.

Massive, transparente Polyurethan(PUR)-Elastomere sind seit langem bekannt und werden, unter entsprechender Anpassung, in unterschiedlichen Anwendungsbereichen eingesetzt. Besonders zu erwähnen sind hier die Polyurethan-Gele (DE-A 100 24 097).

Im Allgemeinen sind Polyurethan-Gele transparente Werkstoffe mit einem hohen spezifischen Gewicht. Sie zeichnen sich durch spezielle mechanische Eigenschaften aus, wie z. B. gute Schockabsorption. Dieses visko-elastische Verhalten ist besonders gut in dünnen Schichten ausgeprägt. Als Beispiel sei hier die Verwendung von PUR-Gelen in Fersenkissen genannt. Ist die Schichtdicke jedoch zu groß, beobachtet man, dass die Energieaufnahme des Materials sehr hoch wird. Eine niedrigere Dämpfung ist, speziell bei dieser Anwendung, aufgrund physiologischer Betrachtungen jedoch günstiger [Dissertation Walther M., Zusammenhänge zwischen der subjektiven Beurteilung von Laufschuhen, den Materialdaten, sowie kinetischen und kinematischen Parametern des Gangzyklus. Universität Würzburg, 2001].

Ein weiterer Nachteil dieser formstabilen Gele besteht in ihrer Herstellung. Dabei wird ein langkettiges Polyol mit einem Polyisocyanat bei einer niedrigen Kennzahl zur Reaktion gebracht. Durch diese sogenannte Untervernetzung ergeben sich zu lange Prozesszeiten. Darüberhinaus weist das Formteil eine klebrige Oberfläche auf, die durch Umhüllen der Gele mit verschiedenartigen Beschichtungen in einem zusätzlichen Arbeitsschritt abgedeckt werden muß, so dass eine klebfreie Oberfläche erhalten wird.

Um die hohe spezifische Dichte von massiven PUR-Materialien und auch von PUR-Gelen zu erniedrigen, bedient man sich häufig des Einsatzes spezifisch leichterer Füllstoffe, wie z. B. Korkgranulat, Dekorflitter, Polyurethangranulat oder-flocken, Textilfasern, wie z.B. Sisal, Textilstücken, Schaumstoffen, wie z. B. EVA (Ethylvinylacetat), aber auch spezifisch schwereren Füllstoffen, wie z. B. Lederpellets, oder auch geschäumtem Gummi (TR = thermoplastic rubber). In Abhängigkeit vom eingesetzten Füllstoff wird die Dichte des Formteils kleiner oder größer, bevorzugt jedoch kleiner. Bei PUR-Gelen findet die Einarbeitung von Füllstoffen aufgrund der ansprechenden Optik des Formteils ebenfalls Anwendung. Des Weiteren werden Füllstoffe in PUR-Materialien verwendet, um mechanische Eigenschaften zu verbessern, um zur Erniedrigung der Materialkosten beizutragen oder um ein Recycling von anderweitig nicht mehr verwendbaren Rohstoffen zu ermöglichen.

Aufgabe der vorliegenden Erfindung war es, elastomere Polyurethan-Formteile zur Verfügung zu stellen, die die beschriebenen Nachteile der PUR-Gele, wie z.B. die langen Entformzeiten, die klebrige Oberfläche und die hohe Dämpfung nicht aufweisen, gleichzeitig jedoch ein optisch interessantes und ansprechendes attraktives Äußeres besitzt und eine gezielt einstellbare Elastizität aufweist.

Überraschenderweise konnte die vorliegende Aufgabe durch spezielle elastomere Formteile auf Polyurethanbasis gelöst werden.

Gegenstand der Erfindung sind massive, gefüllte Formteile aus Polyurethanelastomeren mit einer Rückprallelastizität (gemessen gemäß DIN 53512) von 20 bis 60 %, mit blasenfreier Optik und klebfreier Oberfläche erhältlich durch Umsetzung einer Polyolformulierung (A) aus
a) einer Polyolkomponente aus
   a1) mindestens einem Polyetherpolyol mit einer OH-Zahl von 20 bis 112 und einer Funktionalität von 2 und mit ≥ 45 % primären OH-Gruppen, welches durch Alkoxylierung eines Starters mit Propylenoxid und/oder Ethylenoxid erhalten wird,
      und
   a2) mindestens einem Polyetherpolyol mit einer OH-Zahl von 20 bis 112 und einer Funktionalität von > 2 bis 6, bevorzugt von 3 bis 6 und mit ≥ 45 % primären OH-Gruppen, welches durch Alkoxylierung eines Starters mit Propylenoxid und/oder Ethylenoxid erhalten wird,
b) Kettenverlängerern und/oder Vernetzern mit einer Hydroxylzahl im Bereich von 600 bis 2000,
c) Katalysatoren,
d) gegebenenfalls Zusatzstoffen
   mit einer Isocyanatkomponente (B) in Gegenwart von
   10 bis 40 Gew.-%, bezogen auf das gefüllte Polyurethanelastomer, Füllstoffen mit einem Durchmesser von 1 bis 10 mm,
   unter Einhaltung eines Äquivalenzverhältnisses der NCO-Gruppen der Isocyanatkomponente (B) zur Summe der gegenüber Isocyanatgruppen reaktiven Wasserstoffe der Komponenten a), b) und c) von 0,8:1 bis 1,2:1, vorzugsweise 0,95:1 bis 1,15:1, besonders bevorzugt 0,98:1 bis 1,05:1.

Ein weiterer Gegenstand der Erfindung ist ein Verfahren zur Herstellung der erfindungsgemäßen massiven gefüllten Formteile aus Polyurethanelastomeren mit einer Rückprallelastizität (gemessen gemäß DIN 53512) von 20 bis 60 %, mit blasenfreier Optik und klebfreier Oberfläche, **dadurch gekennzeichnet, dass** eine Polyolformulierung (A) aus
a) einer Polyolkomponente aus
   a1) mindestens einem Polyetherpolyol mit einer OH-Zahl von 20 bis 112 und einer Funktionalität von 2 und mit ≥ 45 % primären OH-Gruppen, welches durch Alkoxylierung eines Starters mit Propylenoxid und/oder Ethylenoxid erhalten wird,
      und
   a2) mindestens einem Polyetherpolyol mit einer OH-Zahl von 20 bis 112 und einer Funktionalität von > 2 bis 6, bevorzugt von 3 bis 6 und mit ≥ 45 % primären OH-Gruppen, welches durch Alkoxylierung eines Starters mit Propylenoxid und/oder Ethylenoxid erhalten wird,
b) Kettenverlängerern und/oder Vernetzern mit einer Hydroxylzahl im Bereich von 600 bis 2000,
c) Katalysatoren,
d) gegebenenfalls Zusatzstoffen mit einer Isocyanatkomponente (B) und
   10 bis 40 Gew.-%, bezogen auf das gefüllte Polyurethanelastomer, Füllstoffen mit einem Durchmesser von 1 bis 10 mm
   unter Einhaltung eines Äquivalenzverhältnisses der NCO-Gruppen der Isocyanatkomponente (B) zur Summe der gegenüber Isocyanatgruppen reaktiven Wasserstoffe der Komponenten a), b) und c) von 0,8:1 bis 1,2:1, vorzugsweise 0,95:1 bis 1,15:1, besonders bevorzugt 0,98:1 bis 1,05:1
   gemischt wird und diese Mischung in eine Form gegeben wird und innerhalb von max. 5 Minuten aushärtet.

Als Isocyanatkomponente können die aus der PUR-Chemie bekannten Diisocyanate, bevorzugt aromatische Diisocyanate eingesetzt werden. Besonders bevorzugt werden Prepolymere aus 4,4'-Diphenylmethandiisocyanat und/oder modifiziertem 4,4'-Diphenylmethandiisocyanat (wie z. B. durch Carbodiimidisierung oder Allophanatisierung) und ein oder mehreren Polyetherpolyolen mit einer OH-Zahl von 10 bis 112 und Polyethylenglykolen und/oder Polypropylenglykolen mit Molekulargewichten von 135 g/mol bis 700 g/mol verwendet.

Die eingesetzten Komponenten a1), a2), b), c) und d) sind bekannt. Es handelt sich hierbei um die in der Polyurethanchemie eingesetzten Verbindungen.

Würde das Formteil ohne Füllstoff hergestellt, hätte das Polyurethan eine Dichte von 1050 bis 1200 kg/m³.

Als Füllstoffe können Korkgranulat, Lederpellets, Dekorflitter, Polyurethangranulat, Polyurethanflocken, Textilfasern, wie z.B. Sisal, Textilstücke, Schaumstoffe, wie z.B. EVA (Ethylvinylacetat), geschäumtes Gummi (TR = thermoplastic rubber) und Glasfasern eingesetzt werden.

Die massiven, gefüllten, elastomeren Polyurethanformteile werden zum Beispiel für technische Artikel und Gebrauchsartikel, insbesondere Schuhsohlen und Schuheinbauteile verwendet.

Die Erfindung soll anhand der nachfolgenden Beispiele näher erläutert werden.

### Beispiele

Zur Herstellung der Formteile werden die beiden Komponenten A (Polyolkomponente) und B (Isocyanatkomponente) mittels einer Schnecke (Fa. Klöckner Desma, Achim) miteinander vermengt. Zu diesem Reaktionsgemisch wird der Füllstoff zudosiert. Das Reaktionsgemisch aus Polyol-Füllstoff-Isocyanat wird in eine offene Form gegeben und ausgehärtet.

Die Komponente A mit einer Materialtemperatur von 30°C wurde mit der NCO-Prepolymerkomponente B mit einer Materialtemperatur von ebenfalls 30°C vermischt. Der Füllstoff wurde zu dieser Reaktionsmischung zugegeben. Die Mischung wurde in eine auf 50°C temperierte Aluminium-Klappform (Größe 200*70*10 mm) eingefüllt und die Klappform geschlossen. Das Formteil wurde nach einigen Minuten entformt.

An den so hergestellten Formkörpern wurde die Shore A-Härte gemäß DIN 53505 nach 24 h Lagerung bestimmt. Weiterhin wurde die Rückprallelastizität gemäß DIN 53512 ermittelt. Des Weiteren wurden Eindrückversuche an Formteilen gemäß DIN 53579, Ziffer IV durchgeführt.

Die Messergebnisse sind in der nachstehenden Tabelle 1 zusammengefasst.

### Ausgangsmaterialien:

### Polyetherpolyole:

1) Gemisch aus Tripropylenglykol und Polyetherpolyol auf Basis Propylenoxid mit einer OH-Zahl der Mischung von 163.
2) Polyetherpolyol mit einer OH-Zahl von 28 und mit 70 % Propylenoxid und 30 % Ethylenoxideinheiten und 90 % primären OH-Gruppen und Propylenglykol als Starter.
3) Polyetherpolyol mit einer OH-Zahl von 56 und mit 86 % Propylenoxid und 14 % Ethylenoxideinheiten und ca. 45 % primären OH-Gruppen und Glyzerin als Starter.
4) Polyetherpolyol mit einer OH-Zahl von 28 und mit 82 % Propylenoxid und 18 % Ethylenoxideinheiten und 85 % primären OH-Gruppen und Sorbit als Starter.
5) Polyetherpolyol mit einer OH-Zahl von 27 und mit 78 % Propylenoxid und 22 % Ethylenoxideinheiten und 90 % primären OH-Gruppen und Glyzerin als Starter.
6) Polyetherpolyol mit einer OH-Zahl von 56 und mit 40 % Propylenoxid und 60 % Ethylenoxideinheiten und > 90 % primären OH-Gruppen und Trimethylolpropan als Starter.

### Isocyanatkomponente:

1) Prepolymer mit einem NCO-Gehalt von 19,8 %, hergestellt durch Umsetzung von 66 Gew.-Teilen 4,4'-Diisocyanatodiphenylmethan (4,4'-MDI), 5 Gew.-Teilen modifiziertem 4,4'-MDI mit einem NCO-Gehalt von 30 % (hergestellt durch teilweise Carbodiimidisierung) und 29 Gew.-Teilen des Polyetherpolyols 1).
2) Polymerhaltiges Prepolymer mit einem NCO-Gehalt von 31,5 % (Desmodur 44V10L Handelsprodukt der Bayer MaterialScience AG).

### Beispiel 1 (Erfindungsgemäß):

Die Polyolkomponente bestand aus
3712,50 Gew.-Teilen des difunktionellen Polyetherpolyols 2),
1125,00 Gew.-Teilen des Polyetherpolyols 3),
75,00 Gew.-Teilen Dabco in Ethylenglykol,
25,00 Gew.-Teilen Diethylenglykol
50,00 Gew.-Teile Triethanolamin
12,50 Gew.-Teile Dimethylbis[(1-oxoneodecyl)oxy]stannan.
100 Gew.-Teile dieser Polyolkomponente wurden mit 24 Gew.-Teilen des Prepolymers 1 und mit 14 Gew.-Teilen Korkgranulat mit einer Korngröße von 1 mm vermischt (Kennzahl 98).

### Beispiel 2 (Erfindungsgemäß):

Die Polyolkomponente bestand aus
3712,50 Gew.-Teilen des difunktionellen Polyetherpolyols 2),
1125,00 Gew.-Teilen des Polyetherpolyols 4),
75,00 Gew.-Teilen Dabco in Ethylenglykol,
25,00 Gew.-Teilen Diethylenglykol,
50,00 Gew.-Teile Triethanolamin,
12,50 Gew.-Teile Dimethylbis[(1-oxoneodecyl)oxy]stannan.
100 Gew.-Teile dieser Polyolkomponente wurden mit 25 Gew.-Teilen des Prepolymers 1 und mit 14 Gew.-Teilen Korkgranulat mit einer Korngröße von 1 mm vermischt (Kennzahl 98).

### Beispiel 3 (Vengleich):

Die Polyolkomponente bestand aus
4038,00 Gew.-Teilen des difunktionellen Polyetherpolyols 2),
500,00 Gew.-Teilen des Polyetherpolyols 5),
350,00 Gew.-Teilen 1,4-Butandiol,
25,00 Gew.-Teilen Ethylenglykol,
2,50 Gew.-Teilen Dabco,
40,00 Gew.-Teile Dabco blockiert mit 2-Ethylhexansäure,
30,00 Gew.-Teile Triethanolamin,
1,50 Gew.-Teile Dibutylzinndilaurat,
3,00 Gew.-Teile Dibutylzinndisulfid.
10,00 Gew.-Teile Wasser
100 Gew.-Teile dieser Polyolkomponente wurden mit 48 Gew.-Teilen des Prepolymers 1 und mit 5 Gew.-Teilen Korkgranulat mit einer Korngröße von 1 mm vermischt (Kennzahl 98).

### Beispiel 4 (Vergleich):

Die Polyolkomponente bestand aus
1000 Gew.-Teilen des trifunktionellen Polyetherpolyols 6),
10 Gew.-Teilen Dabco in Dipropylenglykol,
100 Gew.-Teile dieser Polyolkomponente wurden mit 5 Gew.-Teilen des Prepolymers 2 und mit 15 Gew.-Teilen Korkgranulat mit einer Korngröße von 1 mm vermischt (Kennzahl 60).

### Beispiel 5 (Vergleich):

Komponente A (Polyolkomponente aus Polyetherpolyol 2), Polyetherpolyol 3), Dabco in Ethylenglykol und Dimethyl bis[(1-oxoneodecyl)oxy]stannan) wurden mit Prepolymer 1 vermischt.

Ohne einen Kettenverlängerer/Vemetzer fand kaum eine Reaktion statt; die Mischung blieb flüssig und führte nicht zu einer Verfestigung. Auch der Einsatz eines anderen, stärkeren Katalysators (Zinnkatalysator UL-32) führte nicht zum Erfolg; die Mischung blieb flüssig.

### Beispiel 6 (Vergleich):

Ein Polyolgemisch (10 Gew.-Teile Polyetherpolyol {OH-Zahl 36, Funktionalität F=3, TMP gestartet, 20 % Ethylenoxid, 80 % Propylenoxid}, 40 Gew.-Teile Polyetherpolyol {OH-Zahl 56, F=2, PG gestartet, 100 % Propylenoxid}, 50 Gew.-Teile Polyetherpolyol {OH-Zahl 56, F=3, TMP gestartet, 55 % Ethylenoxid, 45 % Propylenoxid}) und Coscat 83 (Katalysator) wurden mit

Desmodur^{®} N 3400 von Bayer MaterialScience AG versetzt.

Es fand kaum eine Reaktion statt, so dass die Mischung flüssig blieb.

**Tabelle 1**

| **Beispiel** | **Beispiel 1** | **Beispiel 2** | **Beispiel 3** | **Beispiel 4** |
|---|---|---|---|---|
| **Härte** **[Shore A]/[Asker C]** | 55/74 | 48/70 | 37/55 | 28/56 |
| **Füllgrad Gew.-%** | 15 | 15 | 5 | 15 |
| **Rückprall-Elastizität [%]** | 40 | 41 | 34 | 29 |
| **rel. Energieaufnahme ΔW*** | 0,24 | 0,31 | 0,23 | 0,33 |
| **Mindestentformzeit [min]**** | 3,5 | 3 | 4 | 5,5 |
| **Optik/Oberfläche** | transparent trocken | transparent trocken | milchig trocken | transparent klebrig |
| **Verformung [mm]***** | 0,96 | 0,94 | 1,53 | 3,11 |

| | | | | |
|---|---|---|---|---|
| * *Die Energieaufnahme* Δ*W wird auch als Dämpfung bezeichnet und ergibt sich aus der Messung der Arbeit während der Belastung eines Probekörpers in Newton und Arbeit während der Probenentlastung* Δ*W = [W(Belast.)- W(Entlast.)]*/*W(Belast.)* ** *Mindestentformzeit bedeutet die Zeit, die notwendig ist, um ein Formteil ohne Verformung aus der Form herausnehmen zu können und dass keine klebrige Oberfläche mehr aufweist.* *** *Die Verformung in mm wird ermittelt, indem an den Probekörper eine konstante Kraft von 150 N angelegt wird.* | | | | |

Wie aus Tabelle 1 ersichtlich zeigen die erfindungsgemäßen Beispiele 1 und 2
1.) ein besseres Entformverhalten (kürzere Entformzeit)
2.) eine blasenfreie Optik mit einer trockenen, klebfreien Oberfläche
3.) eine deutlich geringere Verformung und damit verbundene Energieaufnahme
4.) bei fast gleich bleibenden Härtegrade gezielt einstellbare Werte für die Rückprallelastizität

## Patentansprüche

1. Massive gefüllte Formteile aus Polyurethanelastomeren mit einer Rückprallelastizität (gemessen gemäß DIN 53512) von 20 bis 60 %, mit blasenfreier Optik und klebfreier Oberfläche erhältlich durch Umsetzung einer Polyolformulierung (A) aus
a) einer Polyolkomponente aus
a1) mindestens einem Polyetherpolyol mit einer OH-Zahl von 20 bis 112 und einer Funktionalität von 2 und mit ≥ 45 % primären OH-Gruppen, welches durch Alkoxylierung eines Starters mit Propylenoxid und/oder Ethylenoxid erhalten wird,
und
a2) mindestens einem Polyetherpolyol mit einer OH-Zahl von 20 bis 112 und einer Funktionalität von > 2 bis 6, bevorzugt von 3 bis 6 und mit ≥ 45 % primären OH-Gruppen, welches durch Alkoxylierung eines Starters mit Propylenoxid und/oder Ethylenoxid erhalten wird,
b) Kettenverlängerern und/oder Vernetzern mit einer Hydroxylzahl im Bereich von 600 bis 2000,
c) Katalysatoren,
d) gegebenenfalls Zusatzstoffen
mit einer Isocyanatkomponente (B) in Gegenwart von
10 bis 40 Gew.-%, bezogen auf das gefüllte Polyurethanelastomer, Füllstoffen mit einem Durchmesser von 1 bis 10 mm,
unter Einhaltung eines Äquivalenzverhältnisses der NCO-Gruppen der Isocyanatkomponente (B) zur Summe der gegenüber Isocyanatgruppen reaktiven Wasserstoffe der Komponenten a), b) und c) von 0,8:1 bis 1,2:1, vorzugsweise 0,95:1 bis 1,15:1, besonders bevorzugt 0,98:1 bis 1,05:1.

2. Elastomere Formteile gemäß Anspruch 1, **dadurch gekennzeichnet, dass** als Isocyanatkomponente (B) ein Prepolymer aus 4,4'-Diphenylmethandiisocyanat und/oder modifiziertem 4,4'-Diphenylmethandiisocyanat und ein oder mehreren Polyetherpolyolen mit einer OH-Zahl von 10 bis 112 und Polyethylenglykolen und/oder Polypropylenglykolen mit Molekulargewichten von 135 g/mol bis 700 g/mol eingesetzt wird.

3. Verfahren zur Herstellung von massiven gefüllten Formteilen aus Polyurethanelastomeren mit einer Rückprallelastizität (gemessen gemäß DIN 53512) von 20 bis 60 %, mit blasenfreier Optik und klebfreier Oberfläche gemäß Anspruch 1 oder2, **dadurch gekennzeichnet, dass** eine Polyolformulierung (A) aus
a) einer Polyolkomponente aus
a1) mindestens einem Polyetherpolyol mit einer OH-Zahl von 20 bis 112 und einer Funktionalität von 2 und mit ≥ 45 % primären OH-Gruppen, welches durch Alkoxylierung mit Propylenoxid und/oder Ethylenoxid erhalten wird,
und
a2) mindestens einem Polyetherpolyol mit einer OH-Zahl von 20 bis 112 und einer Funktionalität von > 2 bis 6, bevorzugt von 3 bis 6 und mit ≥ 45 % primären OH-Gruppen, welches durch Alkoxylierung mit Propylenoxid und/oder Ethylenoxid erhalten wird,
b) Kettenverlängerern und/oder Vernetzern mit einer Hydroxylzahl im Bereich von 600 bis 2000,
c) Katalysatoren,
d) gegebenenfalls Zusatzstoffen
mit einer Isocyanatkomponente (B) und
10 bis 40 Gew.-%, bezogen auf das gefüllte Polyurethanelastomer, Füllstoffen mit einem Durchmesser von 1 bis 10 mm
unter Einhaltung eines Äquivalenzverhältnisses der NCO-Gruppen der Isocyanatkomponente (B) zur Summe der gegenüber Isocyanatgruppen reaktiven Wasserstoffe der Komponenten a), b) und c) von 0,8:1 bis 1,2:1, vorzugsweise 0,95:1 bis 1,15:1, besonders bevorzugt 0,98:1 bis 1,05:1
gemischt wird und diese Mischung in eine Form gegeben wird und innerhalb von max. 5 Minuten aushärtet.

4. Verfahren gemäß Anspruch 3, **dadurch gekennzeichnet, dass** als Isocyanatkomponente (B) ein Prepolymer aus
4,4'-Diphenylmethandiisocyanat und/oder modifiziertem 4,4'-Diphenylmethandiisocyanat und
einem oder mehreren Polyetherpolyolen mit einer OH-Zahl von 10 bis 112 und
Polyethylenglykolen und/oder Polypropylenglykolen mit Molekulargewichten von 135 bis 700 g/mol
eingesetzt wird.

5. Verwendung der massiven, gefüllten, elastomeren Polyurethanformteile gemäß Anspruch 1 und 2 für technische Artikel und Gebrauchsartikel, insbesondere Schuhsohlen und Schuheinbauteile.

## Claims

1. Solid, filled polyurethane elastomer mouldings with a resilience (measured according to DIN 53512) of 20 to 60% and with void-free optics and a tack-free surface, obtainable by reacting a polyol formulation (A) comprising
a) a polyol component consisting of
a1) at least one polyetherpolyol with an OH number of 20 to 112 and a functionality of 2 and with ≥45% of primary OH groups, obtained by alkoxylating a starter with propylene oxide and/or ethylene oxide,
and
a2) at least one polyetherpolyol with an OH number of 20 to 112 and a functionality of >2 to 6, preferably of 3 to 6, and with ≥45% of primary OH groups, obtained by alkoxylating a starter with propylene oxide and/or ethylene oxide,
b) chain extenders and/or crosslinking agents with a hydroxyl number ranging from 600 to 2000,
c) catalysts
d) and optionally additives,
with an isocyanate component (B) in the presence of
10 to 40 wt.%, based on the filled polyurethane elastomer, of fillers with a diameter of 1 to 10 mm,
the equivalence ratio of the NCO groups in isocyanate component (B) to the sum of the isocyanate-reactive hydrogens in components a), b) and c) being maintained at 0.8:1 to 1.2:1, preferably at 0.95:1 to 1.15:1 and particularly preferably at 0.98:1 to 1.05:1.

2. Elastomer mouldings according to Claim 1, **characterized in that** a prepolymer of 4,4'-diphenylmethane diisocyanate and/or modified 4,4'-diphenylmethane diisocyanate and one or more polyetherpolyols with an OH number of 10 to 112, and polyethylene glycols and/or polypropylene glycols with molecular weights of 135 g/mol to 700 g/mol, is used as isocyanate component (B).

3. Process for the production of solid, filled polyurethane elastomer mouldings with a resilience (measured according to DIN 53512) of 20 to 60% and with void-free optics and a tack-free surface, according to Claim 1 or 2, **characterized in that** a polyol formulation (A) comprising
a) a polyol component consisting of
a1) at least one polyetherpolyol with an OH number of 20 to 112 and a functionality of 2 and with ≥45% of primary OH groups, obtained by alkoxylation with propylene oxide and/or ethylene oxide,
and
a2) at least one polyetherpolyol with an OH number of 20 to 112 and a functionality of >2 to 6, preferably of 3 to 6, and with ≥45% of primary OH groups, obtained by alkoxylation with propylene oxide and/or ethylene oxide,
b) chain extenders and/or crosslinking agents with a hydroxyl number ranging from 600 to 2000,
c) catalysts
d) and optionally additives,
is mixed with an isocyanate component (B) and
10 to 40 wt.%, based on the filled polyurethane elastomer, of fillers with a diameter of 1 to 10 mm,
the equivalence ratio of the NCO groups in isocyanate component (B) to the sum of the isocyanate-reactive hydrogens in components a), b) and c) being maintained at 0.8:1 to 1.2:1, preferably at 0.95:1 to 1.15:1 and particularly preferably at 0.98:1 to 1.05:1,
and this mixture is placed in a mould and cured within max. 5 minutes.

4. Process according to Claim 3, **characterized in that** a prepolymer of
4,4'-diphenylmethane diisocyanate and/or modified 4,4'-diphenylmethane diisocyanate and
one or more polyetherpolyols with an OH number of 10 to 112, and
polyethylene glycols and/or polypropylene glycols with molecular weights of 135 to 700 g/mol,
is used as isocyanate component (B).

5. Use of the solid, filled elastomeric polyurethane mouldings according to Claims 1 and 2 for industrial articles and basic consumer articles, especially shoe soles and shoe inserts.

## Revendications

1. Pièces moulées massives additionnées de charge constituées d'élastomères de polyuréthane avec un rebondissement élastique (mesuré selon DIN 53512) de 20 à 60 %, avec une optique exempte de bulles et une surface exempte d'adhérence obtenues par réaction d'une formulation de polyol (A) constituée de
a) un constituant polyol constitué de
a1) au moins un polyétherpolyol avec un indice OH de 20 à 112 et une fonctionnalité de 2 et avec ≥ 45 % de groupes OH primaire, lequel est obtenu par alcoxylation d'une amorce avec de l'oxyde de propylène et/ou de l'oxyde d'éthylène, et
a2) au moins un polyétherpolyol avec un indice OH de 20 à 112 et une fonctionnalité > 2 à 6, de préférence de 3 à 6 et avec ≥ 45 % de groupes OH primaires, lequel est obtenu par alcoxylation d'une amorce avec de l'oxyde de propylène et/ou de l'oxyde d'éthylène,
b) d'agents d'allongement de chaîne et/ou d'agents de réticulation avec un indice hydroxyle dans le domaine de 600 à 2000,
c) de catalyseurs,
d) éventuellement d'additifs
avec un constituant isocyanate (B) en présence de
10 à 40 % en poids, rapporté à l'élastomère de polyuréthane additionné de charge, de charges avec un diamètre de 1 à 10 mm,
en maintenant un rapport d'équivalent des groupes NCO du constituant isocyanate (B) à la somme des hydrogènes réactifs par rapport aux groupes isocyanates des constituants a), b) et c) de 0,8:1 à 1,2:1, de préférence de 0,95:1 à 1,15:1, encore mieux de 0,98:1 à 1,05:1.

2. Pièces moulées élastomères selon la revendication 1, **caractérisées en ce que** l'on utilise comme constituant isocyanate (B) un prépolymère de diisocyanate de 4,4'-diphénylméthane et/ou de diisocyanate de 4,4'-diphénylméthane modifié et un ou plusieurs polyéther-polyols avec un indice OH de 10 à 112 et des polyéthylèneglycols et/ou des polypropylèneglycols avec des poids moléculaires de 135 g/mol à 700 g/mol.

3. Procédé pour la préparation de pièces moulées massives additionnées de charge constituées d'élastomères de polyuréthane avec un rebondissement élastique (mesuré selon DIN 53512) de 20 à 60 % avec une optique exempte de bulles et une surface exempte d'adhérence selon la revendication 1 ou 2, **caractérisé en ce que** l'on mélange une formulation de polyol (A) constituée de
a) un constituant polyol constitué de
a1) au moins un polyétherpolyol avec un indice OH de 20 à 112 et une fonctionnalité de 2 et avec ≥ 45 % de groupes OH primaires, lequel est obtenu par alcoxylation avec de l'oxyde de propylène et/ou de l'oxyde d'éthylène, et
a2) au moins un polyétherpolyol avec un indice OH de 20 à 112 et une fonctionnalité > 2 à 6, de préférence de 3 à 6 et avec ≥ 45 % de groupes OH primaires, lequel est obtenu par alcoxylation avec de l'oxyde de propylène et/ou de l'oxyde d'éthylène
b) d'agents d'allongement de chaîne et/ou d'agents de réticulation avec un indice hydroxyle dans le domaine de 600 à 2000,
c) de catalyseurs
d) éventuellement d'additifs
avec un constituant isocyanate (B) et
de 10 à 40 % en poids, rapporté à l'élastomère de polyuréthane additionné de charge, de charges avec un diamètre de 1 à 10 mm,
en maintenant un rapport d'équivalent des groupes NCO du constituant isocyanate (B) à la somme des hydrogènes réactifs par rapport aux groupes isocyanates des constituants a), b) et c) de 0,8:1 à 1,2:1, de préférence de 0,95:1 à 1,15:1, encore mieux de 0,98:1 à 1,05:1.
et on introduit ce mélange dans un moule et on le durcit en l'espace au maximum de 5 min.

4. Procédé selon la revendication 3, **caractérisé en ce que** l'on utilise comme constituant isocyanate (B) un prépolymère constitué de diisocyanate de 4,4'-diphénylméthane et/ou de diisocyanate de 4,4'-diphénylméthane modifié et
un ou plusieurs polyétherpolyols avec un indice OH de 10 à 112 et
des polyéthylèneglycols et/ou des polypropylèneglycols avec des poids moléculaires de 135 g/mol à 700 g/mol.

5. Utilisation des pièces moulées de polyuréthane massives, additionnées de charge, élastomères selon la revendication 1 et 2 pour des articles techniques et des articles utilitaires en particulier des semelles de chaussures et des pièces de construction de chaussures.
